# EUROPEAN PATENT APPLICATION

(11) **EP 4 307 414 A1**
(43) Date of publication of application: **17.01.2024**
(21) Application number: 22184870.8
(22) Date of filing: 14.07.2022
(51) Int. Cl.: H01M 8/04664

(54) **METHOD FOR DETECTING A HYDROGEN LEAK IN A FUEL CELL ELECTRIC VEHICLE, COMPUTER PROGRAM PRODUCT, LEAKAGE DETECTION SYSTEM AND FUEL CELL ELECTRIC VEHICLE**

(71) Applicant: AVL List GmbH, 8020 Graz (AT)
(72) Inventor: Alzorgan, Mohammad, Coventry (GB); Sathyapalan, Akhil, Coventry (GB)

(57) **Abstract**

The present invention relates to a method (100) and a leakage detection system (20) for detecting a hydrogen leak (L) in a fuel cell electric vehicle (40) having a hydrogen tank system (10) and a fuel cell system (30), a corresponding computer program product, and a corresponding fuel cell electric vehicle (40).

## Description

The present invention relates to a method for detecting a hydrogen leak in a fuel cell electric vehicle having a hydrogen tank system and a fuel cell system, a computer program product, a leakage detection system and a fuel cell electric vehicle.

It is known from the prior art to detect hydrogen leaks in fuel cell electric vehicles by means of hydrogen concentration sensors provided around the vehicle. However, it has been found by the inventors that there are cases where such sensors may not detect a hydrogen leak with the certainty required due to its potential danger or not detect it at all. Such cases have been observed by the inventors in cases where a hydrogen leak is in a blind spot of the sensors, a hydrogen leak is in a spot where air is blowing the hydrogen away from the sensor while driving operation of the vehicle and a sensor has a failure.

It is the task of the present invention to at least partially eliminate the disadvantages described above. In particular, it is the object of the present invention to provide a method for detecting a hydrogen leak in a fuel cell electric vehicle in a cost-effective, simple and highly reliable manner.

The foregoing problem is solved by a method having the features of claim 1, a computer program product having the features of claim 11, a leakage detection system having the features of claim 12 and a fuel cell electric vehicle having the features of claim 13. Further features and details of the invention result from the subclaims, the description and the drawings. Features and details described in connection with the method according to the invention are of course also valid in connection with the computer program product according to the invention as well as the leakage detection system and the fuel cell electric vehicle according to the invention and vice versa in each case, so that with regard to the disclosure concerning the individual aspects of the invention reference is or can always be made mutually.

According to the invention, a method for detecting a hydrogen leak in a fuel cell electric vehicle having a hydrogen tank system and a fuel cell system is provided. The method comprises the following steps:
- receiving a pressure inside the hydrogen tank system,
- determining an operation state of the hydrogen tank system and/or of the fuel cell system, wherein the operation state may be an idle operation state, in which the hydrogen tank system and/or the fuel cell system is not running, or a running operation state, in which the hydrogen tank system and/or the fuel cell system is running,
- checking if the pressure is below a normal pressure threshold upon determining the idle operation state of the hydrogen tank system and/or the fuel cell system, or
- checking if a pressure drop rate of the pressure is below a maximum pressure drop rate threshold upon determining the running operation state of the hydrogen tank system and/or the fuel cell system, and
- detecting the hydrogen leak if the pressure is below the normal pressure threshold or the pressure drop rate is below the maximum pressure drop rate threshold.

Thereby, the invention provides for a method where a hydrogen leak may be detected based on a pressure reading of the hydrogen tank system. For this purpose, different operation states of the hydrogen tank system and/or the fuel cell system are considered, in which pressure values are checked against different thresholds dependent on the particular operation state. According to the predefined checks, a hydrogen leak can be detected with high certainty. The method of the invention is independent from hydrogen concentration sensors of the fuel cell vehicle and thus has a higher accuracy to detect a hydrogen leak. However, both ways of detecting a hydrogen leak, namely the method proposed herein and the method of measuring hydrogen by hydrogen concentration sensors, in particular be combined, as will be explained later in more detail.

The operation state in the method is determined in order to assess which of the two checking steps needs to be performed or, in other words, which criterion needs to be checked in order to possibly detect a hydrogen leak. One of the two operation states that may be determined by the method is an idle operation state, in which the hydrogen tank system and/or the fuel cell system is not running. This idle operation state may in particular be a state during standby of one system or both systems or when one or both systems are shut off. It may also be a state in which one or both systems are ready to run but not actually running. The other of the two operation states is a running operation state, in which the hydrogen tank system and/or the fuel cell system is running. Such state may also include start-up and cool-down phases of one of the systems or both systems.

For the idle operation state, a check is performed whether the pressure inside the hydrogen tank system is below a normal pressure threshold, which may be predefined. This is based on the concept that when the hydrogen tank system and/or the fuel cell system is or are not running, the received pressure should be above a certain limit, which is given by the normal pressure threshold. When the pressure is below the normal pressure threshold, it can be judged that a hydrogen leak must be present causing the pressure being lower than the normal pressure threshold.

For the running operation state, a check is performed whether a pressure drop rate of the pressure inside the hydrogen tank system is below a maximum pressure drop threshold, which may be predefined or calculated in real-time, as explained later. The pressure drop rate is a pressure drop or, in other words, negative pressure change per time (unit). This is based on the concept that when the hydrogen tank system and/or the fuel cell system is or are running, the pressure is influenced by the hydrogen being used up by the fuel cell system. However, there may be certain limits, which are considered herein as a maximum pressure drop rate threshold, that may not be exceeded unless there is a hydrogen leak. Thus, when the pressure drop rate is below the maximum pressure drop rate threshold, it can be judged that a hydrogen leak must be present causing the pressure drop rate being higher than the maximum pressure drop rate threshold.

It is possible that the pressure is measured by a pressure sensor located in a hydrogen supply line fluidically connecting individual hydrogen tanks of the hydrogen tank system with the fuel cell system. Accordingly, the pressure sensor may be a common pressure sensor for all individual hydrogen tanks. Tank valves may be located in between the individual tanks and the hydrogen supply line allowing to control hydrogen flow from the individual tanks via the hydrogen supply line to the fuel cell system, which is connected fluidically with the hydrogen tank system.

The normal pressure threshold may in particular be a normal pressure threshold range having an upper normal pressure threshold and a lower normal pressure threshold. Accordingly, a range is provided, in which the pressure is expected in the idle operation state. The advantage of this is that it may not only be checked if the pressure is falling below but also if it is below the normal pressure threshold range to detect a hydrogen leak.

It is possible that the normal pressure threshold range is predefined to include noise variation in the pressure inside the hydrogen tank system. Thereby a risk of false detections of hydrogen leaks, which could be caused by noise variation of the pressure, is eliminated or at least reduced.

The maximum pressure drop rate threshold may be predefined. This in particular means that the maximum pressure drop rate threshold is a fixed and given value. It is an expected threshold, which under normal running operation state conditions should not be exceeded. Accordingly, when that value is exceeded, a fault is very likely.

Alternatively, the maximum pressure drop rate threshold may be calculated based on a current hydrogen consumption of the fuel cell system. Thereby, the maximum pressure drop rate threshold is not a fix value but actually dependent on the current running operation state of the fuel cell, i.e., its hydrogen consumption. The current hydrogen consumption may be calculated or estimated from the power feedback of the fuel cell system, for example. Accordingly, when the hydrogen tank system is supplying more hydrogen than the fuel cell system with its fuel cell stacks is consuming, this can be identified and detected as a hydrogen leak. Usage of such maximum pressure drop rate threshold may be more accurate than using a predefined, in particular fixed, threshold as described above.

Moreover, it is possible to use both maximum pressure drop rate thresholds, namely the predefined one and the one based on the current hydrogen consumption of the fuel cell system. This may improve hydrogen leak detection accuracy even further.

Also, it is possible that least one hydrogen concentration sensor of the fuel cell vehicle is measuring hydrogen concentrations around the fuel cell vehicle to detect the hydrogen leak. This is a further way of improving hydrogen leak detection accuracy by providing a redundancy detection when a hydrogen leak is not being detected by the at least one hydrogen concentration sensor. Of course, multiple hydrogen concentration sensors may be used.

The hydrogen leak may in particular be located in a blind spot of the at least one hydrogen concentration sensor. Also, or, in the alternative, the hydrogen leak may be located in a spot of the at least one hydrogen concentration sensor, where the air is blowing the hydrogen away from the at least one hydrogen concentration sensor during driving operation of the fuel cell vehicle. Also, or, in the alternative, the at least one hydrogen concentration sensor may be faulty. In such cases, the redundancy detection provided for by the steps of receiving, determining, checking and detecting of the herein described method still allows for hydrogen leak detection and thereby ensuring the safety of the fuel cell electric vehicle.

In particular, the hydrogen leak may be located anywhere in the fuel cell electric vehicle. In other words, a hydrogen leak may be detected independent from its location in or around the vehicle. This is a particular advantage of the method of the invention because it does not rely on external hydrogen concentration sensors but rather on a hydrogen tank system internal pressure reading.

Moreover, it is possible that the steps of the method are repeated continuously. This in particular relates to the steps of receiving, determining, checking and, if applicable, detecting, of the method. But it may also include other steps of the method as mentioned herein. The advantage of this is that a continuous leak monitoring is being provided. The steps may in particular be repeated at a predefined time interval of a few minutes or a minute or, preferably, a few seconds or milliseconds or a second or millisecond, for example.

A further object of the present invention is a computer program product comprising instructions which, when the program is executed by a computer, cause the computer to perform the method according to the invention.

Thus, a computer program product according to the invention brings the same advantages as have been explained in detail with reference to the method according to the invention.

The computer program product may be a computer program per se or a product, such as a computer-readable data storage device, on which a computer program for carrying out the method according to the invention may be stored.

A further object of the present invention is a (hydrogen) leakage detection system for detecting a hydrogen leak in a fuel cell electric vehicle having a hydrogen tank system and a fuel cell system. The leakage detection system comprises the following modules:
- a receiving module for receiving a pressure inside the hydrogen tank system,
- a determining module for determining an operation state of the hydrogen tank system and/or of the fuel cell system, wherein the operation state may be an idle operation state, in which the hydrogen tank system and/or the fuel cell system is not running, or a running operation state, in which the hydrogen tank system and/or the fuel cell system is running,
- a checking module for checking if the pressure is below a normal pressure threshold upon determining the idle operation state of the hydrogen tank system and/or the fuel cell system, or checking if a pressure drop rate of the pressure is below a maximum pressure drop rate threshold upon determining the running operation state of the hydrogen tank system and/or the fuel cell system, and
- a detecting module for detecting the hydrogen leak if the pressure is below the normal pressure threshold or the pressure drop rate is below the maximum pressure drop rate threshold.

Thus, a leakage detection system according to the invention brings the same advantages as have been explained in detail with reference to the method according to the invention. In particular, the leakage detection system may be configured to carry out the method according to the invention.

The leakage detection system may in particular be implemented in a control unit of the hydrogen tank system or form the control unit of the hydrogen tank system.

A further object of the present invention is a fuel cell electric vehicle having a hydrogen tank system and a fuel cell system, wherein the hydrogen tank system comprises the leakage detection system according to the invention.

Thus, a fuel cell electric vehicle according to the invention brings the same advantages as have been explained in detail with reference to the method according to the invention.

The fuel cell system may comprise one or multiple fuel cell stacks and balance of plants periphery, such as pumps, sensors, heat exchangers, seals, compressors, recirculation blowers, intercoolers and humidifiers.

The leakage detection system of the hydrogen tank system may in particular be logically connected to the pressure sensor in the hydrogen supply line. Thereby, the control unit may receive the pressure inside the hydrogen tank system, in particular inside the hydrogen supply line. Moreover, the leakage detection system may in particular be logically connected to the individual tank valves of each one of the individual tanks and a common valve in the hydrogen supply line in order to control hydrogen flow.

The leakage detection system may be or comprise a computer for carrying out the steps of the method of the invention. As described above, the control unit forming or implementing the leakage detection system may comprise individual modules for performing each one of the steps of the method. The modules may, for example, each be implemented by separate computer program code or jointly by common computer program code and/or by separate or common functional units of the leakage detection system. It is also possible that individual modules are implemented in a common module, for example the determining module and the checking module.

Further advantages, features and details of the invention will be apparent from the following description, in which embodiments are described in detail with reference to the drawings. It shows schematically:
- Fig. 1: a fuel cell electric vehicle according to an embodiment of the invention,
- Fig. 2: a method according to an embodiment of the invention,
- Fig. 3: different graphs in correspondence with a first embodiment of the invention,
- Fig. 4: different graphs in correspondence with a second embodiment of the invention, and
- Fig. 5: different graphs in correspondence with a third embodiment of the invention.

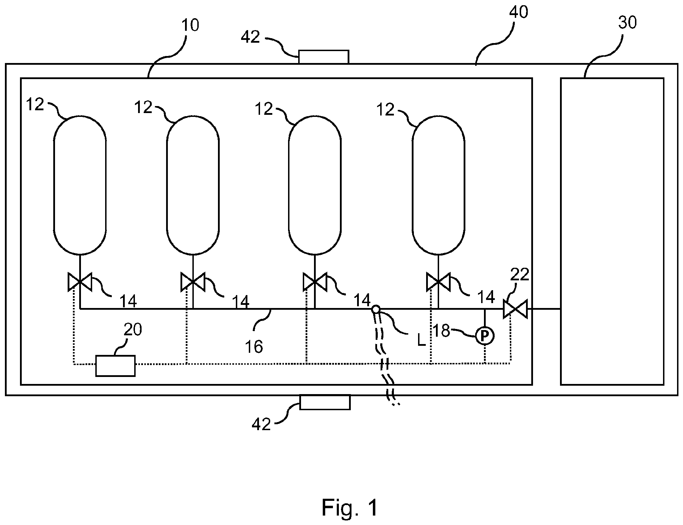

Identical or functionally identical elements are each designated with the same reference sign in Figures 1 to 5.

Figure 1 shows schematically a fuel cell electric vehicle 40 comprising a hydrogen tank system 10 and a fuel cell system 30. The hydrogen tank system 10 is configured for storing hydrogen for supply to the fuel cell system 30. The hydrogen tank system 10 is fluidically connected via a hydrogen supply line 16 to the fuel cell system 30, in particular a main supply line (not shown) of the fuel cell system 30. A hydrogen supply line valve 22 in the hydrogen supply line 16 is provided for regulating the hydrogen pressure from the hydrogen tank system 10 to the fuel cell system 30.

The fuel cell system 30 comprises one or multiple fuel cell stacks and balance of plants periphery, such as pumps, sensors, heat exchangers, seals, compressors, recirculation blowers, intercoolers and humidifiers. Although not shown, the fuel cell electric vehicle 40 may comprise one or multiple electric motors for driving the fuel cell electric vehicle 40. By means of supplying the fuel cell system 30 of the fuel cell electric vehicle 40 with hydrogen from the hydrogen tank system 10, electricity is produced by the fuel cell system 30 and this electricity is supplied to the electric motor(s) of the fuel cell electric vehicle 40.

During normal operation of the fuel cell electric vehicle 40, the fuel cell electric vehicle 40 is safe to be operated. However, there may occur a hydrogen leak L, which may render the further operation of the fuel cell electric vehicle 40 potentially dangerous. An exemplary location of a hydrogen leak L is shown in the hydrogen supply line 16 in Fig. 1.

In order to detect such hydrogen leak L, the fuel cell electric vehicle 40 is provided with multiple hydrogen concentration sensors 42, which may detect the presence and concentration of hydrogen in the air around the fuel cell electric vehicle 40.

However, it is possible and as can be assumed looking at Fig. 1, the hydrogen leak L may be located such that hydrogen is emitted in a blind spot of the bottom hydrogen concentration sensor 42 supposed to detect the hydrogen. Also, the hydrogen leak L may be located in a spot of the hydrogen concentration sensors 42, where the air is blowing the hydrogen away from the sensors 42 during driving operation of the fuel cell vehicle 40. Moreover, one or more of the hydrogen concentration sensors 42 may be faulty.

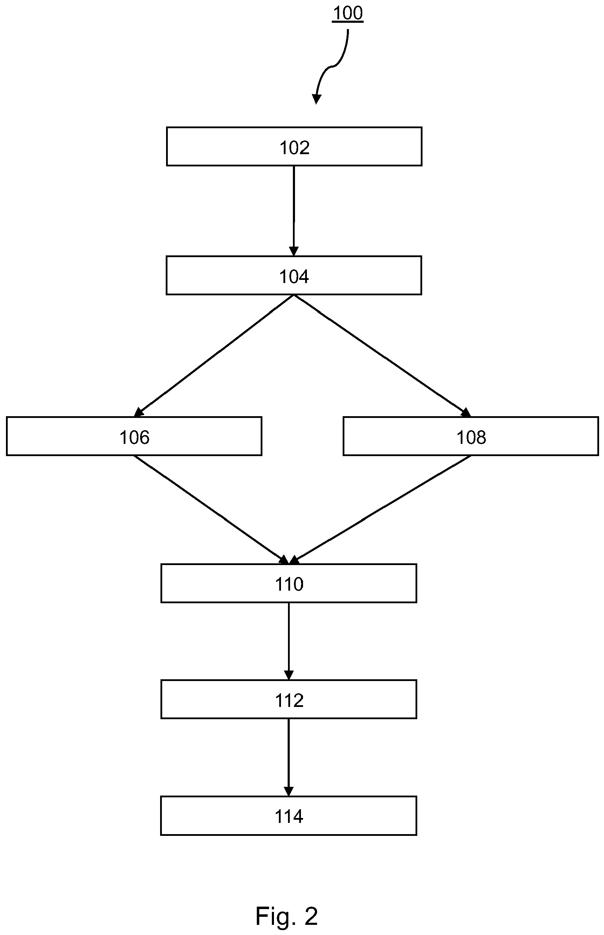

In the above cases, one cannot rely on the hydrogen concentration sensors 42. Thus, the method 100 shown in Fig. 2 is applied by a leakage detection system 20 of the hydrogen tank system 10. As can be taken from Fig. 1, the leakage detection system 20 is logically connected to a pressure sensor 18 inside the hydrogen tank system 10, which in this case is measuring the pressure in the hydrogen supply line 16. Also, the leakage detection system 20 is logically connected to the tank valves 14 and the hydrogen supply line valve 22. Preferably, the leakage detection system 20 may be implemented as or in a control unit of the hydrogen tank system 10.

The method 100 in a first step 102 comprises receiving a pressure P inside the hydrogen tank system 10, which in this case is a pressure P reading from the pressure sensor 18.

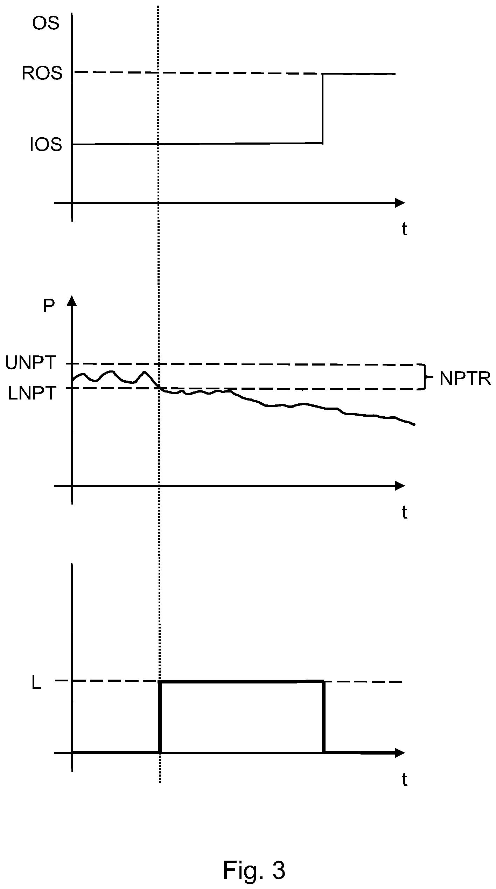

In a second step 104 of the method 100, an operation state OS of the hydrogen tank system 10 and/or of the fuel cell system 30 is or are determined, wherein the operation state OS may be an idle operation state IOS, in which the hydrogen tank system 10 and/or the fuel cell system 30 is or are not running, or a running operation state ROS, in which the hydrogen tank system 10 and/or the fuel cell system 30 is or are running (see top graph in Fig. 3).

Depending on the result of the second step 104, either a third step 106 or a fourth step 108 of the method 100 is performed.

In the third step 106, it is checked if the received pressure P is below a normal pressure threshold NPT upon determining the idle operation state IOS of the hydrogen tank system 10 and/or the fuel cell system 30. This can be seen in the middle graph of Fig. 3, where the idle operation state IOS is determined (top graph of Fig. 3) and the measured pressure P is shown in the middle graph showing over time. In this particular case, there are two normal pressure thresholds NPT, namely an upper normal pressure threshold UNPT and a lower normal pressure threshold LNPT, together forming a normal pressure threshold range NPTR. As long as the pressure P readings are within the pressure threshold range NPTR, it is determined that there is no hydrogen leak L. For this see bottom graph of Fig. 3 indicating when a leak L occurs over time t. This bottom graph can be considered a hydrogen leak redundancy monitor of the leakage detection system 20 implemented in addition to the hydrogen concentration sensors 42.

As long as the pressure P is within the normal pressure threshold range NPTR, the steps 102, 104 and 106 or 108 (depending on the operation state) are repeated. However, when in the third step 106 it is determined that the pressure P is outside of the normal pressure threshold range NPTR as is the case at the vertical dotted line, then a hydrogen leak L is detected in a fifth step 110 as may be seen in the bottom graph of Fig. 3. The steps 102 to 110 of the method 100 are still continuously repeated and as one can take from the middle graph of Fig. 3, the hydrogen leak L is continuously detected as long as the hydrogen tank system 10 and/or the fuel cell system 30 are in idle operation state IOS. However, if they should switch to the running operation state ROS, which would be determined in the second step 104 of method 100, then the checking in third step 106 would not determine a hydrogen leak L as can be seen in Fig. 3. However, for this purpose, the checking operation of the fourth step 108 is different from the one in the third step 106 and this would now be applied due to the changed operation state OS.

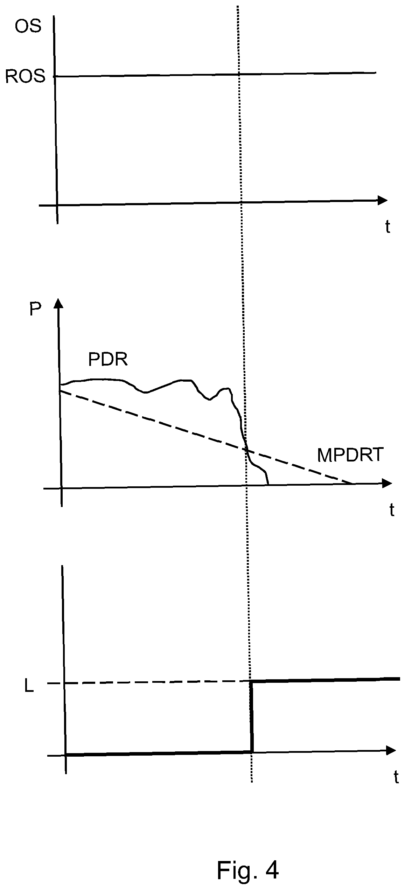

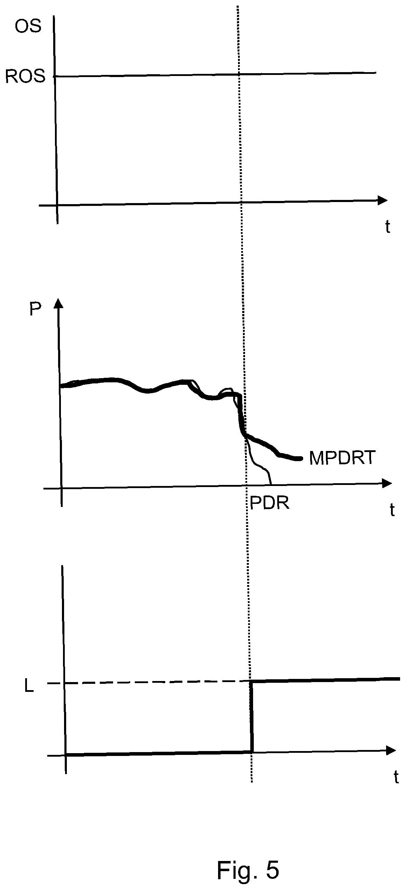

Examples for the running operation state IOS and the fourth step 108 of method 100 are given in Figs. 4 and 5. In Fig. 4, a pressure drop rate PDR of the pressure P is checked against a maximum pressure drop rate threshold MPDRT, which is predefined and fixed. Once the pressure drop rate PDR goes below the maximum pressure drop rate threshold MPDRT, the hydrogen leak L is detected in fifth step 110 as can be taken from the bottom graph of Fig. 4.

Similarly, in Fig. 5, a pressure drop rate PDR of the pressure P is checked against a maximum pressure drop rate threshold MPDRT. However, in this case, the maximum pressure drop rate threshold MPDRT is currently calculated based on a current hydrogen consumption of the fuel cell system 30.

As a possible further step of method 100, Fig. 2 shows as sixth step 112 of method 100 a shut off the hydrogen supply line valve 22 for safety reasons and thereby a shutdown of the fuel cell electric vehicle 40.

Also, a notification and/or recommendation about the hydrogen leak L for the driver of the fuel cell electric vehicle 40 is shown in Fig. 2 as possible seventh step 114 of method 100.

The foregoing explanations of embodiments describe the present invention by way of example only.

### List of reference signs

- 10: hydrogen tank system
- 12: individual tank
- 14: tank valve
- 16: hydrogen supply line
- 18: pressure sensor
- 20: leakage detection system
- 22: hydrogen supply line valve
- 30: fuel cell system
- 40: fuel cell electric vehicle
- 42: hydrogen concentration sensor
- 100: method
- 102: first step
- 104: second step
- 106: third step
- 108: fourth step
- 110: fifth step
- 112: sixth step
- 114: seventh step
- P: pressure
- L: hydrogen leakage
- t: time
- OS: operation state
- IOS: idle operation state
- ROS: running operation state
- NPT: normal pressure threshold
- UNPT: upper normal pressure threshold
- LNPT: lower normal pressure threshold
- NPTR: normal pressure threshold range
- PDR: pressure drop rate
- MPDRT: maximum pressure drop rate threshold

## Claims

1. Method (100) for detecting a hydrogen leak (L) in a fuel cell electric vehicle (40) having a hydrogen tank system (10) and a fuel cell system (30), wherein the method (100) is **characterized by** the following steps:
- receiving a pressure (P) inside the hydrogen tank system (10),
- determining an operation state (OS) of the hydrogen tank system (10) and/or of the fuel cell system (30), wherein the operation state (OS) may be an idle operation state (IOS), in which the hydrogen tank system (10) and/or the fuel cell system (30) is not running, or a running operation state (ROS), in which the hydrogen tank system (10) and/or the fuel cell system (30) is running,
- checking if the pressure (P) is below a normal pressure threshold (NPT) upon determining the idle operation state (IOS) of the hydrogen tank system (10) and/or the fuel cell system (30), or
- checking if a pressure drop rate (PDR) of the pressure (P) is below a maximum pressure drop rate threshold (MPDRT) upon determining the running operation state (ROS) of the hydrogen tank system (10) and/or the fuel cell system (30), and
- detecting the hydrogen leak (L) if the pressure (P) is below the normal pressure threshold (NPT) or the pressure drop rate (PDR) is below the maximum pressure drop rate threshold (MPDRT).

2. Method (100) according to claim 1, **characterized in that** the pressure (P) is measured by a pressure sensor (18) located in a hydrogen supply line (16) fluidically connecting individual hydrogen tanks (12) of the hydrogen tank system (10) with the fuel cell system (30).

3. Method (100) according to claim 1 or 2, **characterized in that** the normal pressure threshold (NPT) is a normal pressure threshold range (NPTR) having an upper normal pressure threshold (UNPT) and a lower normal pressure threshold (LNPT).

4. Method (100) according to claim 3, **characterized in that** the normal pressure threshold range (NPTR) is predefined to include noise variation in the pressure (P) inside the hydrogen tank system (10).

5. Method (100) according to any of the previous claims, **characterized in that** the maximum pressure drop rate threshold (MPDRT) is predefined.

6. Method (100) according to any of claims 1 to 4, **characterized in that** the maximum pressure drop rate threshold (MPDRT) is calculated based on a current hydrogen consumption of the fuel cell system (30).

7. Method (100) according to any of the previous claims, **characterized in that** at least one hydrogen concentration sensor (42) of the fuel cell vehicle (40) is measuring hydrogen concentrations around the fuel cell vehicle (40) to detect the hydrogen leak (L).

8. Method (100) according to claim 7, **characterized in that** the hydrogen leak (L) is located in a blind spot of the at least one hydrogen concentration sensor (42), the hydrogen leak (L) is located in a spot of the at least one hydrogen concentration sensor (42), where the air is blowing the hydrogen away from the at least one hydrogen concentration sensor (42) during driving operation of the fuel cell vehicle (40) and/or the at least one hydrogen concentration sensor (42) is faulty.

9. Method (100) according to any of the previous claims, **characterized in that** the hydrogen leak (L) may be located anywhere in the fuel cell electric vehicle (40).

10. Method (100) according to any of the previous claims, **characterized in that** the steps of the method (100) are repeated continuously.

11. Computer program product comprising instructions which, when the program is executed by a computer, cause the computer to perform the method (100) according to any of the previous claims.

12. Leakage detection system (20) for detecting a hydrogen leak (L) in a fuel cell electric vehicle (40) having a hydrogen tank system (10) and a fuel cell system (30), wherein the leakage detection system (20) is **characterized by** the following modules:
- a receiving module for receiving a pressure (P) inside the hydrogen tank system (10),
- a determining module for determining an operation state (OS) of the hydrogen tank system (10) and/or of the fuel cell system (30), wherein the operation state (OS) may be an idle operation state (IOS), in which the hydrogen tank system (10) and/or the fuel cell system (30) is not running, or a running operation state (ROS), in which the hydrogen tank system (10) and/or the fuel cell system (30) is running,
- a checking module for checking if the pressure (P) is below a normal pressure threshold (NPT) upon determining the idle operation state (IOS) of the hydrogen tank system (10) and/or the fuel cell system (30), or checking if a pressure drop rate (PDR) of the pressure (P) is below a maximum pressure drop rate threshold (MPDRT) upon determining the running operation state (ROS) of the hydrogen tank system (10) and/or the fuel cell system (30), and
- a detecting module for detecting the hydrogen leak (L) if the pressure (P) is below the normal pressure threshold (NPT) or the pressure drop rate (PDR) is below the maximum pressure drop rate threshold (MPDRT).

13. Fuel cell electric vehicle (40) having a hydrogen tank system (10) and a fuel cell system (30) **characterized in that** the hydrogen tank system (10) comprises the leakage detection system (20) according to claim 12.
